(19) Europäisches Patentamt
European Patent Office
Office européen des brevets

(11) Veröffentlichungsnummer: **0 290 909 B1**

# (12) EUROPÄISCHE PATENTSCHRIFT

(45) Veröffentlichungstag der Patentschrift: **07.04.93**

(51) Int. Cl.⁵: **C08G 73/10**

(21) Anmeldenummer: **88107016.3**

(22) Anmeldetag: **02.05.88**

Die Akte enthält technische Angaben, die nach dem Eingang der Anmeldung eingereicht wurden und die nicht in dieser Patentschrift enthalten sind.

## (54) Verwendung von speziellen Polyimiden als Giessfolien und Beschichtungsmaterial.

(30) Priorität: **13.05.87 DE 3715891**

(43) Veröffentlichungstag der Anmeldung:
**17.11.88 Patentblatt 88/46**

(45) Bekanntmachung des Hinweises auf die Patenterteilung:
**07.04.93 Patentblatt 93/14**

(84) Benannte Vertragsstaaten:
**DE FR GB IT**

(56) Entgegenhaltungen:

**PATENT ABSTRACTS OF JAPAN, Band 10, Nr. 230 (C-365)[2286], 9. August 1986; & JP-A-61 64 730 (SUMITOMO BAKELITE CO., LTD) 03-04-1986**

**PATENT ABSTRACTS OF JAPAN, Band 10, Nr. 350 (C-387)[2406], 26. November 1986; & JP-A-61 151 237 (UBE IND LTD) 09-07-1986**

**PATENT ABSTRACTS OF JAPAN, Band 11, Nr. 89 (C-411)[2536], 19. März 1987; & JP-A-61 241 360 (NITTO ELECTRIC IND CO., LTD) 27-10-1986**

**WO 87/00845**

**Elias/Vohwinkel "Neue Polymere Werkstoffe für die industrielle Anwendung", Seiten 257-262**

(73) Patentinhaber: **BAYER AG**

**W-5090 Leverkusen 1 Bayerwerk(DE)**

(72) Erfinder: **Zecher, Wilfried, Dr.**
**Treptowerstrasse 6**
**W-5090 Leverkusen(DE)**
Erfinder: **Arlt, Dieter, Prof. Dr.**
**Rybnikerstrasse 2**
**W-5000 Köln 80(DE)**
Erfinder: **Schrader, Lutz, Dr.**
**Crakauerstrasse 86**
**W-4150 Krefeld(DE)**
Erfinder: **Waldenrath, Werner**
**Maastrichterstrasse 40**
**Köln(DE)**

**EP 0 290 909 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von speziellen Polyimiden zur Herstellung von Gießfolien und Beschichtungen.

Polyimide werden z.B. durch Umsetzung von Pyromellitsäuredianhydrid mit 4,4'-Diaminodiphenylether erhalten (DBP 1 202 981) und finden insbesondere als temperaturbeständige Folien und Formkörper Verwendung. Ein Nachteil dieser Polyimide besteht darin, daß die Verformung über die Polyamidsäure aus dem Lösungsmittel erfolgen muß, da die Polyimide in fast allen Lösungsmitteln unlöslich sind, und daß diese Materialien nicht thermoplastisch sind.

Lösliche Polyimide sind z.B. aus der WO 87/00845 bekannt. Jedoch enthalten diese, wenn die Carbonsäurekomponente vom Propan abgeleitet ist, z.B. vom 2,2-Bis-(4-aminophenoxyphenyl)-propan, mindestens eine Trifluormethylgruppe.

Aus der JP 61/1511237 sind lösliche Polyimide bekannt, die sich von der Biphenyltetracarbonsäure ableiten und die z.B. auch 2,2-Bis-(4-aminophenoxyphenyl)-propan eingebaut enthalten.

Es wurde nun gefunden, daß man Polyimid-Harze, die aus Lösungen zu Folien oder Beschichtungen vergossen werden können, erhält, wenn 2,2-Bis-phthalsäureanhydrido-(4)-propan mit 2,2-Bis[4-aminophenoxyphenyl]-propan bei Temperaturen von 0 bis 400 ° C, vorzugsweise von 10 bis 250 ° C, und vorzugsweise in einem Lösungsmittel zur Umsetzung gebracht wird.

Gegenstand der Erfindung ist die Verwendung von Polyimid-Harzen, hergestellt durch Umsetzung von 2.2-Bis-phthalsäure-anhydrido-(4)-propan (I) mit 2.2-Bis-(4-aminophenoxyl-phenyl)-propan (II) bei Temperaturen von 0 ° C bis 400 ° C und gegebenenfalls 2 bis 70 Val-% bezogen auf (II), weiteren Diaminen, 2 bis 70 Val-% bezogen auf (I), weiteren Tetra-, Tri- oder Dicarbonsäuren und -säureanhydriden zur Herstellung von Gießfolien und Überzügen.

Die Umsetzung von 2.2-Bis-phthalsäure-anhydrido-(4)-propan mit 2.2-Bis-(4-amino-phenoxylphenyl)-propan wird vorzugsweise in Lösungsmittel durchgeführt.

Die Eigenschaften der erfindungsgemäß verwendeten Polyimide sind als überraschend zu bezeichnen, da im allgemeinen die Reaktionsprodukte aus Tetracarbonsäuredianhydriden und aromatischen Diaminen bei der Imidisierung aus den eingesetzten Lösungsmitteln, z.B. N-Methylpyrrolidon, als quallige oder feste Massen ausfallen und dann in technischem Maße überhaupt nicht mehr verarbeitet werden können oder zu Materialien mit einem erheblichen Abfall der Produkteigenschaften, z.B. der Elastizität, führen. Hingegen bilden die erfindungsgemäß verwendeten Polyimide nicht nur in aprotischen Lösungsmitteln wie N-Methylpyrrolidon und Dimethylacetamid, sondern auch in weniger polaren Lösungsmitteln stabile Lösungen und können in dieser Phase auskondensiert und dann aufgearbeitet werden.

Die erfindungsgemäß verwendeten Polyimid-Harze können z.B. aus Methylenchlorid unter sehr viel einfacheren technischen Bedingungen, als dies bei der Verarbeitung von Polyamidsäuren aus aprotischen Lösungsmitteln der Fall ist, zu Folien und Beschichtungen vergossen werden.

Als Tetracarbonsäuredianhydrid wird das 2,2-Bis-phthalsäureanhydrido-(4)propan (I) eingesetzt,

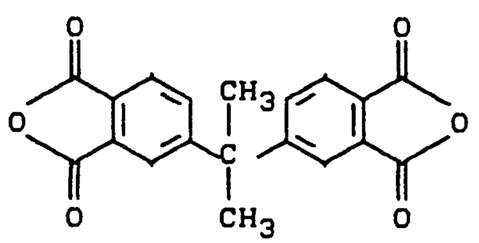

(I)

das z.B. durch Oxidation von 2,2-Bis-[1,2-Dimethylphenyl-(4)-]-propan zugänglich ist. Anstelle des Säureanhydrids können auch Derivate wie die Alkyl- oder Aryl-halbester, Alkyl- oder Aryl-ester, Amide oder die freie Tetracarbonsäure eingesetzt werden.

Als Diamin wird das 2,2-Bis-[4-amino-phenoxyphenyl]-propan (II) zur Umsetzung gebracht,

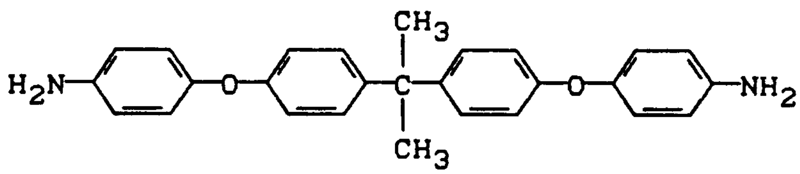

(II)

das weiterhin z.B. mit Alkyl oder Halogen substituiert sein kann. Anstelle des Diamins können auch Derivate wie z.B. die Acetyl-Verbindungen, Isocyanate oder Carbamidsäureester für die erfindungsgemäße Reaktion eingesetzt werden.

Das Diamin kann z.B. durch katalytische Hydrierung von 2,2-Bis-[4-nitro-phenoxyphenyl]-propan hergestellt werden.

Zur Regulierung des Molekulargewichts können z.B. monofunktionelle Carbonsäuren wie Essigsäure, Laurinsäure, Stearinsäure, Benzoesäure und Phenylessigsäure, monofunktionelle Säureanhydride wie Phthalsäureanhydrid, Tetrachlorphthalsäureanhydrid und Phenylphthalsäureanhydrid und Hexanhydrophthalsäureanhydrid und monofunktionelle Amine wie Butylamin, Dodecylamin, Octadecylamin, Cyclohexylamin, Benzylamin, Anilin und Dodecylanilin, deren Derivate und Gemische eingesetzt werden.

Die Reaktion kann in Schmelze oder vorzugsweise in Lösungsmitteln ausgeführt werden. Geeignete Lösungsmittel sind (Halogen)-kohlenwasserstoffe, Phenole, Alkohole, Ester, Lactone, Ketone, Ether, Nitrile, Amide, Sulfoxide und Sulfone, z.B. Nitrobenzol, Chlorbenzol, o-Dichlorbenzol, Methylenchlorid, Treichlorethylen, Pyridin, Phenol, o-, m-, p-Kresol, Caprolacton, Acetophenon, Cyclohexanon, Diethylenglykoldimethylether, Benzonitril, Dimethylacetamid, Caprolactam, N-Methylcaptrolactam, N-Methylpyrrolidon, N-Cyclohexylpyrrolidon, Dimethylsulfon und Tetramethylensulfon oder deren Gemische.

Zur Herstellung der erfindungsgemäß verwendeten Polyimide werden die Reaktionskomponenten mit oder ohne Lösungsmittel einige Minuten bis zu mehreren Stunden bei Temperaturen von 0 bis 400 °C gehalten. Der Verlauf der Reaktion läßt sich beispielsweise über die IR-Spektren und die Abspaltung von Wasser verfolgen.

Die Reaktion kann auch kontinuierlich ausgeführt werden.

Als besonders geeignet haben sich erfindungsgemäß verwendete Polyimide mit einer relativen Viskosität, gemessen an einer 1 %igen Lösung in m-Kresol bei 25 °C, von 1,0 bis 4,0, vorzugsweise von 1,5 bis 2,2, erwiesen.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann die in erster Stufe entstehende Polyamidsäure bei Temperaturen um 20 °C hergestellt und dann bei höheren Temperaturen, gegebenenfalls unter Vakuum oder azeotroper Destillation, in das Polyimid übergeführt werden. Weiterhin kann die Imidisierung auch durch andere geeignete Verfahren, wie auf chemischem Wege z.B. durch Einwirkung von Essigsäureanhydrid oder von Essigsäureanhydrid und Pyridin oder von Carbodiimiden durchgeführt werden.

Eine bevorzugte Ausführungsform besteht darin, das Polyimid oder die Polyamidsäure in einem Lösungsmittel herzustellen, bereits im Kessel zu einer noch fließfähigen Lösung oder einem Schmelzharz aufzukonzentrieren und die restlichen Lösungsmittel, gegebenenfalls unter Nachkondensation und Imidisierung, in einem Eindampfextruder, gegebenenfalls unter Vakuum, bei Temperaturen von 250 bis 400 °C, vorzugsweise von 300 bis 360 °C, auszudampfen.

Nach einer weiteren Ausführungsform wird das Polyimid in einem Lösungsmittel hergestellt und durch Fällung, mit einem Nichtlöser, z. B. mit Wasser oder Methanol, aufgearbeitet.

Im allgemeinen wird pro Val Säureanhydrid ein Val Amin zur Umsetzung gebracht, doch sind auch weitgehende Abweichungen von diesen Mengenverhältnissen möglich.

Weitere mögliche Ausführungsformen bestehen darin, das erfindungsgemäße Bis-phthalsäureanhydridopropan mit geeigneten Tetracarbonsäuredianhydriden, Tri- oder Dicarbonsäuren und das erfindungsgemäße Bis-[aminophenoxyphenyl]-propan mit geeigneten Diaminen abzumischen.

Die Mengenverhältnisse werden so gewählt, daß die erhaltenen Polymere bei Verwendung als Gießfolie oder Beschichtung noch in Lösungsmitteln wie z.B. Methylenchlorid löslich sind. Dabei beträgt der Anteil dieser Polycarbonsäuren 2 bis 70 Val-% und der Anteil an Diaminen ebenfalls 2 bis 70 Val-%, bezogen auf die erfindungsgemäßen Säureanhydride und Amine.

Geeignete Polycarbonsäuren sind z.B. Pyromellitsäuredianhydrid, Diphenyltetracarbonsäuredianhydrid, Benzophenontetracarbonsäuredianhydrid, Cyclopentantetracarbonsäuredianhydrid, Trimellitsäureanhydrid, Terephthalsäure, Isophthalsäure, Adipinsäure, Azelainsäure und Sebazinsäure. Geeignete Diamine sind z.B. 1,6-Diaminohexan, 1,12-Diaminododecan, 1,3- und 1,4-Diaminocyclohexan, m- und p-Phenylendiamin, Bis-[4-aminocyclohexyl]-methan und Amine der allgemeinen Formel (III)

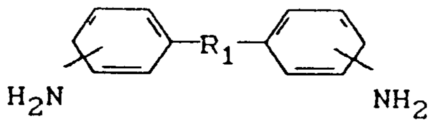 , (III)

in der $R_1$ z.B. die Reste

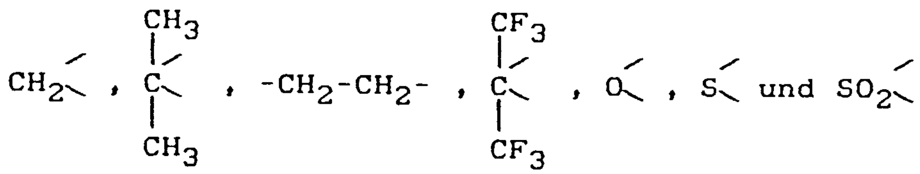

bedeutet und die weiter mit Halogen und Alkyl-Resten substituiert sein können. Bevorzugt werden zur Abmischung 4,4'-Diaminodiphenylether und m-Phenylendiamin eingesetzt.

Die Herstellung der erfindungsgemäß verwendeten Polymeren kann durch Katalysatoren beeinflußt werden, z.B. durch Amine wie Triethylamin, 1,4-Diazabicyclo-(2,2,2)-octan, 2-Methylimidazol und Pyridin, durch anorganische und organische Metallverbindungen wie Verbindungen des Eisens, Bleis, Zinks, Zinns, Kupfers, Kobalts, Nickels und Titans, z.B. Kobaltacetat, Bleioxid, Dibutylzinndilaurat, Kupferacetylacetonat, Nickelacetat, Alkaliphenolate und Natriumcyanid, durch Bor-Derivate wie Borsäure und durch Phosphorverbindungen wie Trialkylphosphin, Methylphospholinoxid, Triphenylphosphit, Triphenylphosphat und Polyphosphorsäure. Bevorzugt werden Pyridin, Borsäure, Triphenylphosphit und Triphenylphosphat verwendet.

Die Polyimidharze können in einer ersten Stufe nach einem bekannten Verfahren in einem Lösungsmittel hergestellt und dann in einem Eindampfextruder bei Temperaturen Von 250 °C bis 400 °C, gegebenenfalls unter Vakuum aufkonzentriert und gegebenenfalls auskondensiert werden.

Die erfindungsgemäßen Gießfolien und Überzüge zeichnen sich durch besondere Elastizität und Wärmeformbeständigkeit aus. Ihre Eigenschaften können für die verschiedenen Anwendungsgebiete durch Änderung der stöchiometrischen Verhältnisse, des Kondensationsgrades und durch Zumischung von nieder- und hochmolekularen Komponenten wie Füllstoffen, Rußen, Farbstoffen, Alterungsschutzmitteln, Gleitmitteln, Weichmachern und weiteren Polymeren variiert werden.

In den Beispielen werden folgende Abkürzungen verwendet;

BPAP für 2,2-Bis-phthalsäureanhydrido-(4)-propan und BAPP für 2,2-Bis-[4-aminophenoxyphenyl]-propan.

Die relative Viskosität wird, falls nicht anders angegeben, an einprozentigen Lösungen in m-Kresol bei 25 °C gemessen.

Beispiel 1

In 430 g N-Methylpyrrolidon wrden 80,36 g 2,2-Bis[4-aminophenoxyphenyl]-propan (BAPP) und 1,48 g Dodecylamin gelöst. Dann werden unter Kühlung bei 15-20 °C 67,2 g 2,2-Bisphthalsäureanhydrido-(4)-propan (BPAP) eingetragen. Die Lösung wird noch 6 Stdn. bei Raumtemperatur gerührt. Dann werden 250 g Toluol zugegeben, ein Veresterunsaufsatz aufgesetzt und die Temperatur bis zum Rückfluß gesteigert. Das im Verlaufe der Reaktion gebildete Wasser wird innerhalb von ca. 3 Stdn. azeotrop abdestilliert und über den Veresterungsaufsatz abgetrennt. Anschließend wird der Veresterungsaufsatz gegen eine Destillationsbrücke ausgetauscht und das Toluol abdestilliert. Das Reaktionsgemisch wird noch ca. 6 Stdn. bei 180 °C gerührt, wobei mehrmals bis zur beginnenden Destillation Vakuum angelegt wird.

Man erhält das Polyimid als hellbraune viskose Lösung. Eine Probe dieser Lösung wird auf eine Glasplatte aufgestrichen und in jeweils 15 Min. bei 200 und 300 °C zu einer klaren elastischen Folie eingebrannt. Die thermogravimetrische Analyse ergibt eine Glastemperatur Tg = 222 °C. Die relative Viskosität einer einprozentigen Lösung dieser Folie in m-Kresol, gemessen bei 25 °C, beträgt

$$\eta^{25}_{rel} = 1,52.$$

Beispiel 2

In 900 g m-Kresol 70, einem technischen Gemisch aus 70 % m- und 30 % p-Kresol, werden 160,7 g BAPP und 2,96 Dodecylamin gelöst. Dann werden unter Kühlung bei 15-20 °C 134,4 g BPAP eingetragen. Man erhält eine viskose Lösung, die noch 4 Stdn. bei Raumtemperatur und dann jeweils 2 Stdn. bei 120, 150, 180 und 190 °C gerührt wird.

Zur Entfernung von Wasser wird im Verlaufe der Reaktion mehrmals unter Vakuum andestilliert. Das Reaktionsgemisch wird abgekühlt, mit 1 kg Methylenchlorid verdünnt und in Methanol gefällt. Das Fällungsprodukt wird getrocknet, in Dimethylacetamid gelöst und nochmals in Methanol gefällt. Man erhält das Polyimid in Form weißer Kügelchen, die im Wasserstrahlvakuum bei langsam bis 200 °C ansteigender Temperatur getrocknet werden. Die relative Viskosität einer 1 %igen Lösung in m-Kresol beträgt

$$\eta^{25}_{rel} = 1,66.$$

Das so hergestellte Polyimid wird in Methylenchlorid zu einem Festgehalt von ca. 10 Gew.-% gelöst und auf einer Labor-Trommelgießmaschine bei ca. 30 °C zu einer klaren elastischen Folie vergossen. Die Reißfestigkeit dieser Folien beträgt 60 N/mm$^2$, die Streckspannung 67 N/mm$^2$ und die Wärmestandfestigkeit nach VDE 230 °C.

Beispiel 3

In 3500 g m-Kresol werden 642,8 g BAPP, 11,84 g Dodecylamin und 537,6 g BPAP entsprechend den Reaktionsbedingungen von Beispiel 2 zur Umsetzung gebracht. Man erhält eine hellbraune Lösung des Polyimids mit einem Festgehalt von ca. 25 Gew.-% und einer Viskosität

$$\eta^{25}_{rel} = 68400 \text{ mPas}.$$

Die so hergestellte Polyimid-Lösung wird in einem ZSK-Eindampfextruder bei einer maximalen Manteltemperatur von 330 °C und einem Druck von 10 mbar aufkonzentriert und anschließend granuliert. Man erhält ein transparentes, elastisches Harz mit einer relativen Viskosität

$$\eta^{25}_{rel} = 1,62,$$

gemessen an einer 1 %igen Lösung im Kresol.

$C_{46}H_{34}N_2O_6$ (710)

| | C | H | N |
|---|---|---|---|
| ber. | 77,8 | 4,8 | 3,9 % |
| gef. | 77,4 | 5,1 | 3,8 % |

Eine Probe des Granulats wird in m-Kresol gelöst, auf eine Glasplatte aufgestrichen und in jeweils 15 Min. bei 200 und 300 °C zu einem klaren elastischen Lackfilm eingebrannt. Eine weitere Probe wird in Methylenchlorid gelöst, auf ein Blech aufgestrichen und das Lösungsmittel zuerst bei Raumtemperatur und dann bei 90 °C abgedampft. Man erhält einen transparenten elastischen Lackfilm.

Beispiel 4

In 260 g N-Cyclohexylpyrrolidon werden 40,18 g BAPP und 0,74 g Dodecylamin gelöst. Dann werden bei 15-20 °C 33,6 g BPAP eingetragen und noch 3 Stdn. bei dieser Temperatur gerührt. Anschließend wird unter Wasserstrahlvakuum im Verlaufe von 6 Stdn. die Temperatur auf 160 °C gesteigert und die Reaktion unter Rückfluß in ca. 3 Stdn. zu Ende geführt. Man erhält eine viskose Lösung des Polyimids, die mit Dimethylacetamid verdünnt und dann in Methanol eingetropft wird. Das Polyimid fällt in Form weißer Kügelchen aus. Die relative Viskosität beträgt

$$\eta_{rel}^{25} = 1,71,$$

gemessen bei 25 °C an einer 1 %igen Lösung in m-Kresol.

Eine Probe des Polyimids wird in m-Kresol gelöst, auf ein Blech aufgestrichen und in jeweils 15 Min. bei 200 ° und 300 °C zu einem klaren elastischen Lackfilm eingebrannt.

Beispiel 5

Die Reaktion wird unter den Bedingungen von Beispiel 4, jedoch in 300 g Tetramethylensulfon als Lösungsmittel, ausgeführt. Die Fällung in Methanol ergibt ein farbloses Polyimit mit einer relativen Viskosität von

$$\eta_{rel}^{25} = 1,87,$$

gemessen an einer 1%igen Lösung in m-Kresol.

Das so hergestellte Polymimid wird in Methylenchlorid gelöst, auf eine Glasplatte aufgestrichen und nach dem Abdampfen des Lösungsmittels bei Raumtemperatur jeweils noch 15 Min. auf 90 °C und dann 200 °C erhitzt. Man erhält eine transparente elastische Folie.

Beispiel 6

In einem Rührkolben mit Veresterungsaufsatz werden in 300 g Chlorbenzol 40,18 g BAPP und 0,74 g Dodecylamin gelöst. Dann werden bei Raumtemperatur 33,6 g BPAP eingetragen und das Reaktionsgemisch noch 6 Stdn. bei Raumtemperatur gerührt. Danach wird 7 Stdn. auf Rückflußtemperatur erhitzt. Das im Verlaufe der Reaktion gebildete Wasser wird im Veresterungsaufsatz abgeschieden. Das Reaktionsprodukt, eine klare viskose Lösung, wird nach dem Erkalten mit Dimethylacetamid verdünnt und in Acetonitril eingetropft. Man erhält das Polyimid in Form weißer Perlen mit einer relativen Viskosität

$$\eta_{rel}^{25} = 1,92.$$

Eine Lösung des Polyimids in Chlorbenzol wird auf einer Glasplatte bei 130 und 250 °C zu einem klaren elastischen Lackfilm eingedampft.

Beispiel 7

Entsprechend Beispiel 6 werden in 300 g o-Dichlorbenzol 40,18 g BAPP, 0,74 g Dodecylamin und 33,6 g BPAP zur Umsetzung gebracht. Man erhält eine hochviskose Lösung des Polyimids, die im IR-Spektrum bei 1725 und 1780 $cm^{-1}$ die für Imide charaktristischen Banden zeigt.

Die Lösung des Polyimids wird mit o-Dichlorbenzol verdünnt, auf eine Glasplatte aufgestrichen und in jeweils 15 Min. bei 180 und 300°C zu einem transparenten elastischen Lackfilm eingebrannt.

Beispiel 8

In 450 g m-Kresol werden 40,18 g BAPP, 10,58 g m-Phenyldiamin und 0,74 g Anilin gelöst. Dann werden bei 15-20°C 67,2 g BPAP eingetragen. Das Gemisch geht bei Raumtemperatur im Verlaufe von 6 Stdn. in eine hochviskose Lösung über. Anschließend wird an einem bei 140°C gehaltenen Rückflußkühler 6 Std. zum Rückfluß erhitzt. Das Reaktionsgemisch wird abgekühlt, im Verhältnis 1:1 mit Methylenchlorid verdünnt und in Methanol gefällt. Man erhält das Polyimid in Form weißer Kügelchen. Die Lösungsviskosität beträgt

$$\eta^{25}_{rel} = 1{,}85.$$

Eine Lösung des Polyimids in m-Kresol wird auf einem Prüfblech in jeweils 15 Min. bei 200 und 300°C zu einem transparenten elastischen Lackfilm eingebrannt.

Beispiel 9

Entsprechend Beispiel 8 werden in 400 g m-Kresol 22,96 g BAPP, 15,12 g m-Phenylendiamin und 0,74 g Anilin mit 67,2 g BPAP zur Umsetzung gebracht.

Man erhält eine Lösung des Polymimids in Kresol mit einem Festgehalt von 20 Gew.-% und einer Viskosität

$$\eta^{25}_{rel} = 108000 \text{ mPas}.$$

Die Lösung des Polyimids wird auf eine Glasplatte aufgestrichen in jeweils 15 Min. bei 200 und 300°C zu einem klaren Lackfilm eingebrannt.

Beispiel 10

Entsprechend Beispiel 8 werden in 560 g m-Kresol 80,36 g BAPP, 0,74 g Anilin und 67,2 g BPAP zur Umsetzung gebracht. Man erhält eine ca. 20%ige Lösung des Polyimids in Kresol, deren Viskosität 318000 mPas beträgt. Die Lösung wird mit Methylenchlorid verdünnt und das Polyimid durch Eintropfen in Methanol gefällt. Die Lösungsviskosität des Polymimids beträgt, gemessen an einer einprozentigen Lösung in m-Kresol,

$$\eta^{25}_{rel} = 2{,}01.$$

Eine Lösung des Polyimids in Methylenchlorid wird auf einer Glasplatte bei Raumtemperatur zu einer klaren elastischen Folie eingedampft.

**Patentansprüche**

**1.** Verwendung von Polyimid-Harzen, hergestellt durch Umsetzung von 2.2-Bis-phthalsäureanhydrido-(4)-propan (I) mit 2.2-Bis-(4-aminophenoxylphenyl)-propan II bei Temperaturen 0°C bis 400°C und gegebenenfalls 2 bis 70 Val-% bezogen auf (II), weiteren Diaminen, 2 bis 70 Val-% bezogen auf (I), weiteren Tetra-, Tri-oder Dicarbonsäuren und -säureanhydriden zur Herstellung von Gießfolien und Überzügen.

**2.** Verwendung nach Anspruch 1, dadurch gekennzeichnet, daß die Polyimidharze durch Umsetzung von 2.2-Bis-phthalsäureanhydrido(4)propan mit 2.2-Bis-(4-aminophenoxyl-phenyl)-propan in Lösungsmittel

durchgeführt wird.

3. Verwendung von Polyimid-Harzen gemäß Anspruch 1, dadurch gekennzeichnet, daß die Polyimide in einer ersten Stufe nach einem bekannten Verfahren in einem Lösungsmittel hergestellt und dann in einem Eindampfextruder bei Temperaturen von 250 ° C bis 400 ° C, gegebenenfalls unter Vakuum aufkonzentriert und gegebenenfalls auskondensiert werden.

4. Verwendung von Polyimid-Harzen gemäß Anspruch 1, dadurch gekennzeichnet, daß die Polyimide in einer ersten Stufe nach einem bekannten Verfahren in einem Lösungsmittel hergestellt und dann mit einem Nichtlöser ausgefällt werden.

5. Verwendung von löslichen Polyimid-Harzen gemäß Anspruch 1, dadurch gekennzeichnet, daß man das 2.2-Bis-phthalsäureanhydridopropan (I) im Gemisch mit 2 bis 70 Val% bezogen auf (I) anderen Polycarbonsäureanydriden und/oder das 2.2-Bis-(4-aminophenoxyphenyl)-propan (II) im Gemisch mit 2 bis 70 Val% bezogen auf (II anderen Diaminen bei Temperaturen von 0 ° C bis 400 ° C umsetzt.

6. Verfahren zur Herstellung von Gießfolien und Beschichtungen aus den Polyimid-Harzen des Anspruchs 1, dadurch gekennzeichnet, daß die Herstellung durch Vergießen der Lösung der Polyimid-Harze in einem Lösungmittel erfolgt.

7. Verfahren gemäß Ansprch 5, dadurch gekennzeichnet, daß die Herstellung durch Vergießen der Lösung in einem Lösungsmittel mit einem Siedepunkt von <150 ° C erfolgt.

**Claims**

1. The use of polyimide resins produced by reaction of 2,2-bis-phthalic anhydrido-(4)-propane (I) with 2,2-bis-(4-aminophenorylphenyl)-propane (II) at temperatures of 0 ° C to 400 ° C and optionally 2 to 70 val-%, based on (II), of other diamines, 2 to 70 val-%, based on (I), of other tetra-, tri- or dicarboxylic acid and anhydrides for the production of cast films and coatings.

2. The use claimed in claim 1, characterized in that the polyimide resin are produced by reaction of 2,2-bis-phthalic anhydrido-(4)-propane with 2,2-bis-(4-aminophenoxylphenyl)-propane in solvents.

3. The use of polyimide resins as claimed in claim 1, characterized in that the polyimides are first produced in known manner in a solvent and are then concentrated, optionally **in vacuo,** in an evaporation extruder at temperatures of 250 to 400 ° C and are optionally fully condensed.

4. The use of polyimide resin as claimed in claim 1, characterized in that the polyimides are first produced in known manner in a solvent and are then precipitated with a non-solvent.

5. The use of soluble polyimide resins as claimed in claim 1, characterized in that the 2,2-bis-phthalic anhydridopropane (I) is reacted in admixture with 2 to 70 val-%, based on (I), of other polycarboxylic anhydrides and/or the 2,2-bis-(4-aminophenoxyphenyl)-propane (II) is reacted in admixture with 2 to 70 val-%, based on (II), of other diamines at temperatures of 0 to 400 ° C.

6. A process for the production of cast films and coatings from the polyimide resins according to claim 1, characterized in that it is carried out by casting a solution of the polyimide resins in a solvent.

7. A process as claimed in claim 5, characterized in that it is carried out by casting the solution in a solvent having a boiling point of <150 ° C.

**Revendications**

1. Utilisation de résines du type polyimide, obtenues par réaction de 2,2-bis-phtalanhydrido-(4)-propane (I) avec le 2,2-bis-(4-aminophénoxylphényl)-propane (II) à des températures de 0 ° C à 400 ° C et, le cas échéant, 2 à 70 % en valence, par rapport à (II), d'autres diamines, 2 à 70 % en valence, par rapport à (I), d'autres acides tétracarboxyliques, tricarboxyliques ou dicarboxyliques et leurs anhydrides, pour la production de feuilles moulées et de revêtements.

2. Utilisation suivant la revendication 1, caractérisée en ce que les résines du type polyimide sont produites par réaction de 2,2-bis-phtalanhydrido-(4)-propane avec le 2,2-bis-(4-aminophénoxylphényl)-propane dans des solvants.

3. Utilisation de résines du type polyimide suivant la revendication 1, caractérisée en ce que les polyimides sont produits dans une première étape par un procédé connu dans un solvant, puis concentrés dans une extrudeuse à évaporation à des températures de 250 °C à 400 °C, éventuellement sous vide et, le cas échéant, condensés.

4. Utilisation de résines du type polyimide suivant la revendication 1, caractérisée en ce que les polyimides sont produits dans une première étape par un procédé connu dans un solvant, puis précipités avec un non-solvant.

5. Utilisation de résines solubles du type polyimide suivant la revendication 1, caractérisée en ce qu'on fait réagir le 2,2-bis-phtalanhydridopropane (I) en mélange avec 2 à 70 % en valence, par rapport à (I), d'autres anhydrides d'acides polycarboxyliques et/ou on fait réagir le 2,2-bis-(4-aminophénoxyphényl)-propane (II) en mélange avec 2 à 70 % en valence, par rapport à (II), d'autres diamines à des températures de 0 °C à 400 °C.

6. Procédé de production de feuilles moulées et de revêtement en résines du type polyimide suivant la revendication 1, caractérisé en ce qu'on effectue la production par coulée de la solution des résines du type polyimide dans un solvant.

7. Procédé suivant la revendication 5, caractérisé en ce que la production est effectuée par coulée de la solution dans un solvant ayant un point d'ébullition inférieur à 150 °C.